# EUROPEAN PATENT APPLICATION

(11) **EP 3 896 631 A1**
(43) Date of publication of application: **20.10.2021**
(21) Application number: 21167669.7
(22) Date of filing: 09.04.2021
(51) Int. Cl.: G06Q 10/08, G06Q 50/28

(54) **AUTONOMOUS MOBILE PICO-FULFILLMENT CENTER**

(30) Priority: 13.04.2020 US 202063009095 P; 29.03.2021 US 202117215948
(71) Applicant: Intelligrated Headquarters, LLC, Mason, OH 45040 (US)
(72) Inventor: LUI, Tak Keung Joseph, Washington, 98006 (US)
(74) Representative: Haseltine Lake Kempner LLP

(57) **Abstract**

Apparatuses, methods and computer program products for a mobile fulfillment center are disclosed herein. An example apparatus may comprise: a mobile platform, wherein the mobile platform is configured to facilitate the movement of the autonomous mobile fulfillment center; an automated storage and retrieval system mounted on the mobile platform, wherein the automated storage and retrieval system is configured to facilitate at least the storage or delivery of one or more items; a communication system mounted on the mobile platform, wherein the communication system is configured to receive one or more communications from a warehouse management system; and a robotic pick and place system mounted on the mobile platform, wherein the robotic pick and place system is configured to pick the one or more items from the automated storage and retrieval system and place the one or more items in a delivery location.

## Description

### CROSS-REFERENCES TO RELATED APPLICATION(S)

**.** The present application claims priority to US Provisional Patent Application No. 63/009,095 (filed April 13, 2020), which is incorporated herein by reference in its entirety.

### TECHNICAL FIELD

**.** The present application relates generally to an autonomous mobile pico-fulfillment center in a material handling environment.

### BRIEF SUMMARY

**.** Various embodiments described herein relate to methods, apparatuses, and systems for automatically performing sorting operations.

**.** In accordance with various examples of the present disclosure, an apparatus is provided. The apparatus may comprise a mobile platform, wherein the mobile platform is configured to facilitate the movement of the autonomous mobile fulfillment center; an automated storage and retrieval system mounted on the mobile platform, wherein the automated storage and retrieval system is configured to facilitate at least the storage or delivery of one or more items; a communication system mounted on the mobile platform, wherein the communication system is configured to receive one or more communications from a warehouse management system; and a robotic pick and place system mounted on the mobile platform, wherein the robotic pick and place system is configured to pick the one or more items from the automated storage and retrieval system and place the one or more items in a delivery location.

**.** In some embodiments, the apparatus may further comprise a mobile warehouse management system mounted on the mobile platform, wherein mobile warehouse management system receives the one or more communications from the warehouse management system via the communication system and is configured to facilitate the delivery of one or more items from the automated storage and retrieval system. In some embodiments, the communication system may comprise a 5G communication system configured to facilitate the delivery of one or more items from the automated storage and retrieval system via 5G cloud services.

. In some embodiments, the apparatus may further comprise a power module mounted on the mobile platform, wherein the power module is configured to supply power to one or more components of the autonomous pico-fulfillment center.

. In some embodiments, the apparatus may further comprise a robotic packaging and address system mounted on the mobile platform, wherein the robotic packaging and address system is configured to receive the one or more items from the robotic pick and place system, package the one or more items, and affix addressee information to said package.

. In some embodiments, the apparatus may further comprise one or more autonomous mobile robots, wherein the autonomous mobile robots are configured to deliver the one or more items to a delivery location.

. In some embodiments, the apparatus may further comprise a stabilization system mounted on the mobile platform, wherein the stabilization system is configured to stabilize at least the automated storage and retrieval system.

. In some embodiments, the apparatus may further comprise one or more video capture devices mounted on the mobile platform, wherein the one or more video capture devices are configured to transmit a video stream of a surrounding area around or within the autonomous mobile pico-fulfillment center.

. In accordance with various examples of the present disclosure, a method is provided. The method may comprise receiving, via a communication system, one or more navigational indications indicative of one or more deployment points; receiving, via a communication system, one or more electronic orders from a warehouse management system, wherein the one or more electronic orders comprise one or more items to deliver and the one or more electronic orders received are based at least in part on the one or more deployment points; generating a control indication to cause an automated storage and retrieval system to perform delivery of one or more items from the one or more electronic orders to the robotic pick and place system; and generating a control indication to cause the robotic pick and place system to pick the one or more items from the one or more electronic orders and place the one or more items in a delivery location.

. In accordance with various examples of the present disclosure, a computer program product is provided. The computer program product may be configured, upon execution, to receive, via a communication system, one or more navigational indications indicative of one or more deployment points; receive, via a communication system, one or more electronic orders from a warehouse management system, wherein the one or more electronic orders comprise one or more items to deliver and the one or more electronic orders received are based at least in part on the one or more deployment points; generate a control indication to cause an automated storage and retrieval system to perform delivery of one or more items from the one or more electronic orders to a robotic pick and place system; and generate a control indication to cause the robotic pick and place system to pick the one or more items from the one or more electronic orders and place the one or more items in a delivery location.

. In accordance with various examples of the present disclosure, an apparatus is provided. The apparatus may comprise a communication system; an automated storage and retrieval system; a robotic pick and place system; and at least one processing component configured to: receive, via a communication system, one or more navigational indications indicative of one or more deployment points; receive, via a communication system, one or more electronic orders from a warehouse management system, wherein the one or more electronic orders comprise one or more items to deliver and the one or more electronic orders received are based at least in part on the one or more deployment points; generate a control indication to cause an automated storage and retrieval system to perform delivery of one or more items from the one or more electronic orders to a robotic pick and place system; and generate a control indication to cause the robotic pick and place system to pick the one or more items from the one or more electronic orders and place the one or more items in a delivery location.

. In accordance with various examples of the present disclosure, a vehicle apparatus is provided. The vehicle apparatus may comprise a mobile platform, wherein the mobile platform is configured to facilitate the movement of the autonomous mobile fulfillment center; an automated storage and retrieval system mounted on the mobile platform, wherein the automated storage and retrieval system is configured to facilitate at least the storage or delivery of one or more items; a communication system mounted on the mobile platform, wherein the communication system is configured to receive one or more communications from a warehouse management system; and a robotic pick and place system mounted on the mobile platform, wherein the robotic pick and place system is configured to pick the one or more items from the automated storage and retrieval system and place the one or more items in a delivery location.

### BRIEF DESCRIPTION OF THE DRAWINGS

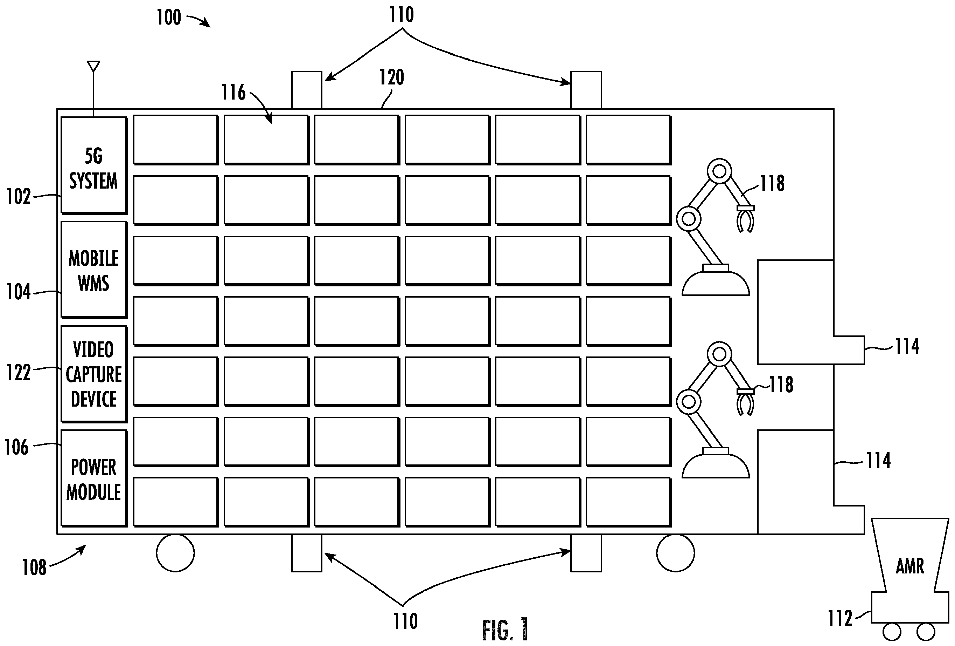

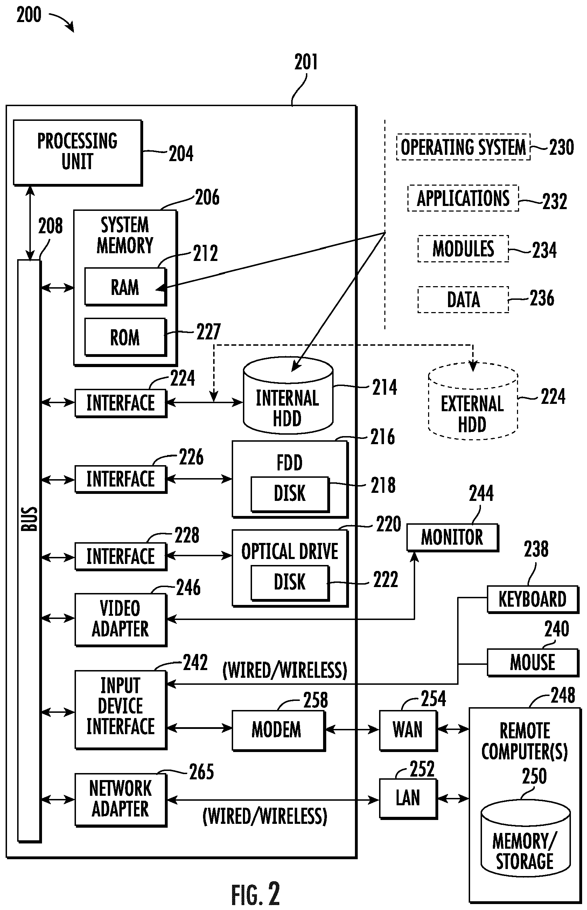

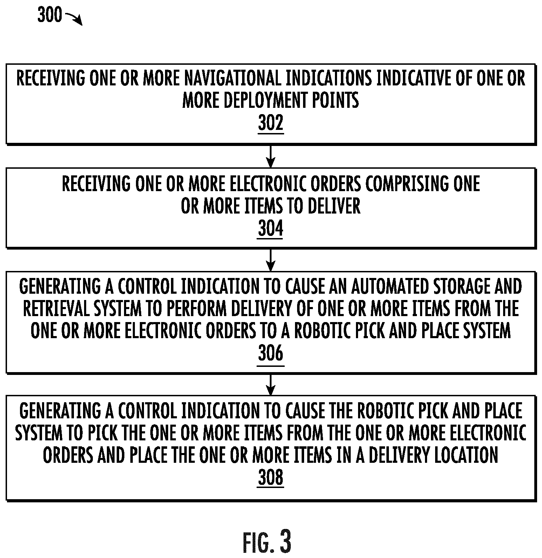

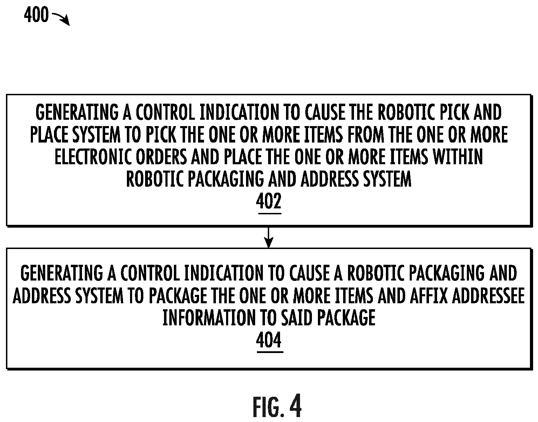

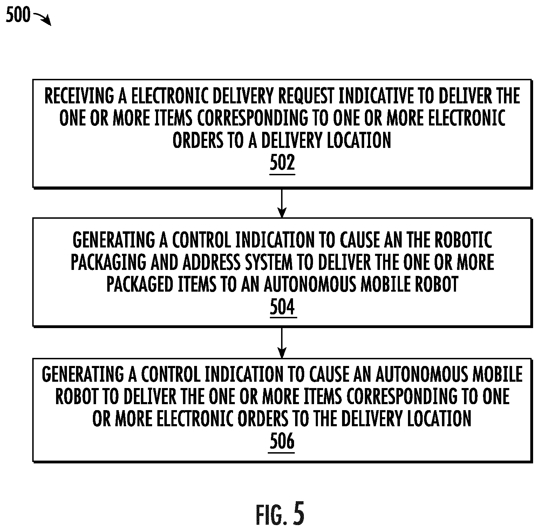

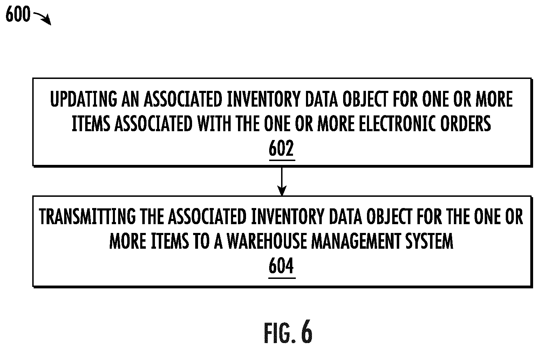

. The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
. FIG. 1 illustrates an example autonomous mobile pico-fulfillment center in accordance with various aspects and embodiments of the subject disclosure.
. FIG. 2 illustrates an example block diagram of a computer that can be operable to execute processes and methods in accordance with various aspects and embodiments of the subject disclosure
. FIG. 3 provides a flowchart diagram of an example process for delivery of one or more items from one or more received electronic orders in accordance with some embodiments discussed herein;
. FIG. 4 provides a flowchart diagram of an example process for packaging one or more items from one or more electronic orders in accordance with some embodiments discussed herein;
. FIG. 5 provides a flowchart diagram of an example process for causing an autonomous mobile robot to deliver one or more items from one or more electronic orders in accordance with some embodiments discussed herein; and
. FIG. 6 provides a flowchart diagram of an example process for updating an associated item inventory in accordance with some embodiments discussed herein.

### DETAILED DESCRIPTION OF THE INVENTION

. Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

. The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

. The phrases "in an example embodiment," "some embodiments," "various embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

. The word "example" or "exemplary" is used herein to mean "serving as an example, instance, or illustration." Any implementation described herein as "exemplary" is not necessarily to be construed as preferred or advantageous over other implementations.

. If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such components or features may be optionally included in some embodiments, or may be excluded.

. The term "electronically coupled" or "in electronic communication with" in the present disclosure refer to two or more electrical elements (for example, but not limited to, an example processing circuitry, communication module, input/output module memory, image sensing component, gripping element) and/or electric circuit(s) being connected through wired means (for example but not limited to, conductive wires or traces) and/or wireless means (for example but not limited to, wireless network, electromagnetic field), such that data and/or information (for example, electronic indications, signals) may be transmitted to and/or received from the electrical elements and/or electric circuit(s) that are electronically coupled.

. The term "user" may refer to a customer, recipient, delivery driver, delivery service, or individual or enterprise associated with one or more electronic orders. In some embodiments, the user may refer to the individual or service receiving the one or more items associated with the one or more electronic orders.

. The term "one or more electronic orders" may refer to an electronically received data construct that is configured to describe one or more transactions. In some embodiments, one or more electronic orders may comprise one or more data objects indicative of one or more items for delivery to a user. In some embodiments, one or more electronic orders may comprise one or more data objects indicative of user information such as user name, billing address, payment information, recipient name, and recipient address. Additionally or alternatively, one or more electronic orders may comprise one or more data objects indicative of an associated deployment point for the delivery of the one or more items described by the electronic order and/or an arranged pick-up time.

. The term "one or more items" may refer to an electronically managed data construct that is configured to describe one or more purchased items, products, stock keeping units, and/or the like associated with one or more electronic orders. In some embodiments, the one or more items describe one or more stocked items within the autonomous mobile pico-fulfillment center such that the one or more items associated with the one or more electronic may be delivered by the autonomous mobile pico-fulfillment center. In some embodiments, each item of the one or more items is stored in an associated storage bay of an automated storage and retrieval system such that each item of the one or more items may be retrieved by accessing the associated item storage bay.

. The term "associated inventory data object" may refer to an electronically managed data construct that is configured to describe the number of available units for each item product, stock keeping unit, and/or the like stocked by the autonomous mobile pico-fulfillment center. In some embodiments, the associated inventory data object is stored locally by a mobile warehouse management system. In some embodiments, the associated inventory data object is stored in a cloud environment accessible by an associated warehouse management system.

. The term "navigational indications" may refer to an electronically received data construct that is configured to describe one or more deployment points for the autonomous mobile pico-fulfillment center to operate at. In some embodiments, the navigational indications may further comprise one or more navigational directions. The one or more deployment points may each comprise a set of coordinates or other location indications indicative of a geographic position at which the autonomous pico-fulfillment center is to be operated. In some embodiments, one or more navigational indications may be received by the autonomous mobile pico-fulfillment center, for example, by a communication system. In some embodiments, the one or more navigational directions described by the one or more navigational indications may be based at least in part on the current position of the autonomous mobile pico-fulfillment center. The current position of the autonomous mobile pico-fulfillment center may be determined any number of ways such an associated sensor capable of transmitting an indication of latitude, longitude, altitude, geocode, course, direction, heading, speed, universal time (UTC), date, and/or various other information/data. In some embodiments, the associated sensor can acquire data, sometimes known as ephemeris data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This data can be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information/data can be determined by triangulating the autonomous mobile pico-fulfillment center position in connection with a variety of other systems, including cellular towers, Wi-Fi access points, and/or the like. Similarly, the autonomous mobile pico-fulfillment center may acquire, for example, latitude, longitude, altitude, geocode, course, direction, heading, speed, time, date, and/or various other information/data using various position or location technologies including RFID tags, indoor beacons or transmitters, Wi-Fi access points, cellular towers, nearby computing devices (e.g., smartphones, laptops) and/or the like. For instance, such technologies may include the iBeacons, Gimbal proximity beacons, Bluetooth Low Energy (BLE) transmitters, NFC transmitters, and/or the like. In some embodiments, the associated vehicle moving the autonomous mobile pico-fulfillment center may be equipped to determine the aforementioned location data.

. The term "return indications" may refer to an electronically received data construct that is configured to describe a return point for the autonomous mobile pico-fulfillment center to return to. In some embodiments, the return indication may further comprise one or more navigational directions. The return point may comprise a set of coordinates or other location indications indicative of a distribution center the autonomous pico-fulfillment center is to be returned to. In some embodiments, a return indication may be received by the autonomous mobile pico-fulfillment center, for example, by a communication system. In some embodiments, the one or more navigational directions described by a return indication may be based at least in part on the current position of the autonomous mobile pico-fulfillment center. The current position of the autonomous mobile pico-fulfillment center may be determined any number of ways such an associated sensor capable of transmitting an indication of latitude, longitude, altitude, geocode, course, direction, heading, speed, universal time (UTC), date, and/or various other information/data. In some embodiments, the associated sensor can acquire data, sometimes known as ephemeris data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This data can be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information/data can be determined by triangulating the autonomous mobile pico-fulfillment center position in connection with a variety of other systems, including cellular towers, Wi-Fi access points, and/or the like. Similarly, the autonomous mobile pico-fulfillment center may acquire, for example, latitude, longitude, altitude, geocode, course, direction, heading, speed, time, date, and/or various other information/data using various position or location technologies including RFID tags, indoor beacons or transmitters, Wi-Fi access points, cellular towers, nearby computing devices (e.g., smartphones, laptops) and/or the like. For instance, such technologies may include the iBeacons, Gimbal proximity beacons, Bluetooth Low Energy (BLE) transmitters, NFC transmitters, and/or the like. In some embodiments, the associated vehicle moving the autonomous mobile pico-fulfillment center may be equipped to determine the aforementioned location data.

. The term "delivery location" may refer to an electronically received data construct indicative of a location to deliver one or more items from one or more electronic orders. In some embodiments, the delivery location is indicative of a location a user may receive his/her associated one or more items from one or more electronic orders. The delivery location may be within a preconfigured radius of a deployment point of the autonomous mobile pico-fulfillment center. In some embodiments, a delivery location may refer to a way-point where the one or more items are delivered to prior to further processing within the autonomous pico-fulfillment center.

. The terms "warehouse management system" or "WMS" may refer to hardware and/or software associated with a distribution center that is configured to manage one or more operations regarding the distribution center and, in some examples, one or more autonomous pico-fulfillment centers. In some embodiments, the WMS may be in communication with an autonomous mobile pico-fulfillment center via a communication system. For example, the WMS may facilitate management one or more items, receive and/or transmit one or more electronic orders, collect item data, collect order data, generate one or more control indications for an autonomous pico-fulfillment center, and the like. In some embodiments, the WMS may transmit one or more communications to a communication system via a 5G cloud computing environment.

. Various embodiments disclosed herein provide for an autonomous mobile pico-fulfillment center that may be transported to various locations to deliver stored items. In some embodiments, the autonomous mobile pico-fulfillment center may be housed in a trailer of a truck or housed in a shipping container that can be transported by truck, rail, or ship. The autonomous mobile pico-fulfillment center may contain storage bays to store items and may further contain various hardware and controllers configured to autonomously retrieve items from the storage bays and deliver the items to a customer, group of customers, or transport items to an intermediate transport system (conveyor, autonomous mobile robot "AMR") or other mechanical device to deliver articles.

. Given the limited available space available in urban areas, it is often difficult to acquire space to build traditional brick-and-mortar fulfillment or micro-fulfillment centers. Even in instances where real-estate space is found and micro-fulfillment centers are built, these centers may be unable to keep up with the market demand as they are usually very small in size due to the high cost associated with such real estate. Additionally, fast delivery windows, such as one-hour delivery windows, are becoming a trend in the e-commerce space, especially in urban areas and college campuses. In order to fulfill these tight delivery windows, micro-fulfillment centers need to be situated in very strategic locations such that they are close to their target customers. However, finding such a location in urban areas is often difficult, if not impossible. Furthermore, consumer buying behaviors are continually changing and therefore require a constantly updated product inventory to match current consumer demand. Data scientists may consistently monitor e-commerce buying behavior within geographical areas and apply machine models to predict the required inventory for these micro-fulfillment centers. However, product selection is often very limited within the micro-fulfillment centers. To make room for in-demand inventory, slow moving items which take up space need to be removed quickly. Although changing the product mix and inventory stocked in these micro-fulfillment centers may allow for the micro-fulfillment centers to meet consumer demand, constantly changing and updating the product inventory may become very costly.

. The present disclosure, in some examples, provides an autonomous mobile pico-fulfillment center that can be transported, parked and become operational as a fulfillment center. In some embodiments, the vehicle that delivers the autonomous mobile pico-fulfillment center may be fully autonomous such that it may drive itself or the vehicle can be remotely driven. In some embodiments, the vehicle may be driven to a deployment point by a driver. Regardless of the method of transporting the autonomous mobile pico-fulfillment center to the deployment point, once parked, the autonomous mobile pico-fulfillment center may perform operations, such as delivery of one or more items to fulfill one or more electronic orders, similarly to a brick-and-mortar fulfillment center.

. In some embodiments, the autonomous mobile pico-fulfillment center may contain a product mix based at least in part on one or more determined deployment points from which the autonomous mobile pico-fulfillment center will operate. In an instance the deployment point changes, or the autonomous mobile pico-fulfillment center is redeployed, a distribution center can facilitate the loading of the autonomous mobile pico-fulfillment center onto or off of a vehicle trailer configured to house the autonomous mobile pico-fulfillment center. In some embodiments, the trailer may be a standard 53-foot trailer. In some embodiments, the autonomous pico-fulfillment center may be loaded into a shipping container, which may be transported using any suitable method, such as a vehicle, aircraft, or maritime vessel. The autonomous mobile pico-fulfillment center may be stocked with an updated item mix based at least in part on the one or more determined deployment points. For example, a specific deployment point may be determined to be associated with a high demand for caffeinated items and may therefore be stocked with caffeinated items such as coffee, energy drinks, and the like.

. In some embodiments, the autonomous mobile pico-fulfillment center may return to an associated distribution center on a periodic basis, such as daily, weekly, or biweekly, to swap out the current item inventory, replenish a current item inventory, and/or be loaded with a different inventory profile, such as grocery, construction materials, toiletries, etc., based at least in part on one or more planned deployment points. In some embodiments, the autonomous mobile pico-fulfillment center may return to the distribution center based at least in part on one or more associated item inventory data objects. For example, if the inventory of one or more in-demand items satisfies a preconfigured inventory threshold, the autonomous mobile pico-fulfillment center may return to a deployment center.

**.** In some embodiments, the autonomous mobile pico-fulfillment center can be used as a pre-last mile distribution center for a postage, or parcel delivery system. In some embodiments, the autonomous mobile pico-fulfillment center can be loaded with postage and parcels that are to be delivered to users in a predetermined radius of a deployment point or within the same zip code. In some embodiments, users, such as customers, delivery drivers, or otherwise end users can go to the autonomous mobile pico-fulfillment center to retrieve their packages and/or post. In other embodiments, "last mile" delivery personnel can utilize the autonomous mobile pico-fulfillment center to gather packages for local delivery.

**.** In some embodiments, the autonomous mobile pico-fulfillment center may be configured with interfaces that enable customers requesting or retrieving items to be notified of when an item will be delivered or to request delivery. In an embodiment, the autonomous mobile pico-fulfillment center can comprise an external touch interface and/or voice interface that enables customers to request, purchase, or deliver items to or from the fully autonomous mobile pico-fulfillment center. In some embodiments, the exterior housing of the autonomous mobile pico-fulfillment center, such as a trailer, may additionally or alternatively be configured with the one or more external interfaces that may enable customers to interact with the autonomous mobile pico-fulfillment center. In some embodiments, these interactions may include but are not limited to ordering one or more stocked items, retrieving one or more ordered items, receiving a notification comprising at least an estimated time for the one or more ordered items to be delivered, requesting delivery of one or more ordered items, or returning one or more items. In some embodiments, customers can order items via a mobile app, and the fully autonomous mobile pico-fulfillment center may have 5G, 4G, WiFi, Bluetooth or other communications protocols that can receive the requests from the customers and facilitate delivery of the requested items.

. In some embodiments, the autonomous mobile pico-fulfillment center may have one or more associated delivery locations where users can retrieve one or more associated ordered items. In some embodiments, the autonomous mobile pico-fulfillment center may deploy one or more autonomous mobile robots (AMR) to deliver the one or more ordered items to a nearby user. As an example, the autonomous mobile pico-fulfillment center may receive delivery request data object indicative that a user is in a delivery location (e.g. in parking spot 6) and deploy an AMR carrying the one or more items to be delivered to said user. The AMR may deliver the items to the user and return to the autonomous mobile pico-fulfillment center to load additional items for delivery to the same user or to other users.

. In some embodiments, power for the autonomous mobile pico-fulfillment center can be provided by an associated vehicle. In some embodiments, the autonomous mobile pico-fulfillment center can comprise a generator (diesel, fuel-cell, etc.) or comprise batteries that can power the autonomous mobile pico-fulfillment center. In some embodiments, the autonomous mobile pico-fulfillment center can be powered by one or more electrical lines, plugs or other sources of power at or near the deployment point. In some embodiments, the various sub-systems comprising the autonomous pico-fulfillment center may be powered by different power sources.

. In some embodiments, the autonomous mobile pico-fulfillment center may comprise one or more of the following subsystems, a communication system, a power module, an automatic hydraulic stabilization system, an automated storage and retrieval system, a mobile warehouse management system (M-WMS), a robotic pick and place system, a robotic packaging and address system, one or more AMRs, a temperature control unit, and one or more video capture devices. In some embodiments, the one or more subsystems may be mounted upon a mobile platform configured to move the autonomous mobile pico-fulfillment center onto or off from a trailer. In some embodiments, the mobile platform may be configured with a set of wheels to facilitate such movement.

. As used in this disclosure, in some embodiments, the terms "component," "system" and the like are intended to refer to, or comprise, a computer-related entity or an entity related to an operational apparatus with one or more specific functionalities, wherein the entity can be either hardware, a combination of hardware and software, software, or software in execution. As an example, a component may be, but is not limited to being, a process running on a processor, a processor, an object, an executable, a thread of execution, computer-executable instructions, a program, and/or a computer. By way of illustration and not limitation, both an application running on a server and the server can be a component.

. One or more components may reside within a process and/or thread of execution and a component may be localized on one computer and/or distributed between two or more computers. In addition, these components can execute from various computer readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software application or firmware application executed by a processor, wherein the processor can be internal or external to the apparatus and executes at least a part of the software or firmware application. As yet another example, a component can be an apparatus that provides specific functionality through electronic components without mechanical parts, the electronic components can comprise a processor therein to execute software or firmware that confers at least in part the functionality of the electronic components. While various components have been illustrated as separate components, it will be appreciated that multiple components can be implemented as a single component, or a single component can be implemented as multiple components, without departing from example embodiments.

. Further, the various embodiments can be implemented as a method, apparatus or article of manufacture using standard programming and/or engineering techniques to produce software, firmware, hardware or any combination thereof to control a computer to implement the disclosed subject matter. The term "article of manufacture" as used herein is intended to encompass a computer program accessible from any computer-readable (or machine-readable) device or computer-readable (or machine-readable) storage/communications media. For example, computer readable storage media can comprise, but are not limited to, magnetic storage devices (e.g., hard disk, floppy disk, magnetic strips), optical disks (e.g., compact disk (CD), digital versatile disk (DVD)), smart cards, and flash memory devices (e.g., card, stick, key drive). Of course, those skilled in the art will recognize many modifications can be made to this configuration without departing from the scope or spirit of the various embodiments.

**.** Turning now to FIG. 1, illustrated is an autonomous mobile pico-fulfillment center 100 that can be delivered or otherwise driven to a location and deployed to autonomously deliver and/or distribute one or more items to fulfill one or more electronic orders. As depicted, the autonomous mobile pico-fulfillment center 100 may comprise one or more of the following subsystems, a communication system 102, a mobile warehouse management system (M-WMS) 104, a power module 106, a stabilization system 110, one or more autonomous mobile robots (AMRs) 112, a robotic packaging and address printing system 114, a temperature control unit 116, robotic pick and place system 118, an automated storage and retrieval system (ASRS) 120, and one or more video capture devices 122. In some embodiments, the one or more subsystems may be mounted upon a mobile platform 108 configured to facilitate the movement of the autonomous mobile pico-fulfillment center 100 onto or off from a trailer, shipping container, or the like. In some embodiments, the mobile platform 108 may include wheels that facilitate removal of the autonomous mobile pico-fulfillment center 100 from a trailer for restocking at a distribution center and for loading on to a trailer after restocking is complete.

. In some embodiments, the autonomous mobile pico-fulfillment center 100 may include a M-WMS 104 to facilitate one or more operations of the autonomous mobile pico-fulfillment center 100. In some embodiments, the M-WMS 104 may receive one or more communications from the warehouse management system (WMS) that is associated with a distribution center.

. In some embodiments, the one or more communications may comprise one or more navigational indications indicative of one or more deployment points and one or more navigational directions. In some embodiments, the one or more communications may be indicative of one or more electronic orders comprising one or more items, products, stock keeping units, and/or the like.

. In some embodiments, the M-WMS 104 may manage operations of the ASRS 120, such as by generation of a control indication, to retrieve the one or more items from the one or more electronic orders from storage bays and deliver the one or more items to a delivery location or an AMR 112. For example, the M-WMS 104 may generate a control indication to cause the ASRS 120 to retrieve one or more storage bays currently housing the one or more items from the one or more electronic orders. The control indication may be indicative of a delivery location where the ASRS 120 is to deliver the one or more items. The delivery location may be the closest adjacent spot to the robotic pick and place system 118 or the closest adjacent spot to an AMR 112.

. In some embodiments, the M-WMS 104 may also manage the operation of the robotic pick and place system 118 to cause the robotic pick and place system 118 to pick the one or more items and deliver the one or more items to a delivery location or a robotic packaging and address printing system 114. For example, the M-WMS 104 may generate a control indication to cause the robotic pick and place system 118 to retrieve one or more items from an adjacent storage bay of the ASRS 120. The robotic pick and place system 118 may retrieve the one or more items, for example, from the adjacent storage bay and delivery the one or more items to a delivery location. The delivery location may be to a nearby AMR 112, an external output compartment, and/or a designated spot within the robotic packaging and address printing system 114.

. In some embodiments, the M-WMS 104 may also manage operations of the one or more items from the robotic packaging and address printing system 114 to the one or more AMRs 112. For example, the M-WMS 104 may generate a control signal to cause the robotic packaging and address printing system 114 to package one or more items received at a designated spot within the robotic packaging and address printing system 114, such as, from the robotic pick and place system 118. In some embodiments, the generated control signal may cause the robotic packaging and address printing system 114 to package two or more items from two or more electronic orders associated with the same delivery address in the same package. In some embodiments, the generated control signal may indicate the type of packaging the robotic packaging and address printing system 114 should use to package the one or more items. In some embodiments, the generated control signal may cause the robotic packaging and address printing system 114 to affix addressee information. In some embodiments, the generated control signal may cause the robotic packaging and address printing system 114 to affix one or more warnings, precautions, or other indications related to the one or more packaged items. In some embodiments, the generated control signal may cause the one or more packaged items to be delivered to a delivery location, such as to one or more AMRs 112.

. In some embodiments, the M-WMS 104 may manage operations of one or more subsystems of the autonomous mobile pico-fulfillment center 100. In some embodiments, the M-WMS 104 may manage operations associated with the stabilization system 110, such as generating a control signal to cause the stabilization system 110 of a portion of at least the ASRS 120 and/or one or more other subsystems of the autonomous mobile pico-fulfillment center 100. In some embodiments, the M-WMS 104 may generate a control signal to cause one or more AMRs 112 to transport one or more items to a delivery location for delivery to a user. In some embodiments, the M-WMS 104 may verify user entered input received from the one or more AMRs and provide the one or more AMRs with an indication of whether the user is verified. In some embodiments, the M-WMS 104 may generate a control signal to cause one or more temperature control units 116 to control the temperature of one or more portions of the ASRS 120. In some embodiments, the M-WMS 104 may receive a live video stream data object from one or more video capture devices 122. The M-WMS 104 may store the live video stream data object in an associated memory, such as memory 206, and/or transmit the live video stream data object to communication system 102.

. In some embodiments, the communication system 102, may be configured to receive and transmit one or more communications from or to an associated WMS. In some embodiments, the communication system 102 may include a 5G communication system configured to communicate with the WMS via 5G cloud services. In some embodiments, the communication system 102 may additionally or alternatively manage operations of the stabilization system 110, ASRS 120, robotic pick and place system 118, robotic packaging and address printing system 114, one or more AMRs 112 via received communications from the WMS. In some embodiments, the communication system 102 may be configured to facilitate communication between a local M-WMS associated with the autonomous mobile pico-fulfillment center 100 and the WMS. In some embodiments, such communications may include but are not limited to route planning, order fulfillment, AMR control, and inventory control.

. In some embodiments, the communication system 102 may manage operations of the ASRS 120, such as by transmitting a control indication, to retrieve the one or more items from the one or more electronic orders from storage bays and deliver the one or more items to a delivery location or an AMR 112. For example, the communication system 102 may transmit a control indication to cause the ASRS 120 to retrieve one or more storage bays currently housing the one or more items from the one or more electronic orders. The control indication may be indicative of a delivery location where the ASRS 120 is to deliver the one or more items. The delivery location may be the closest adjacent spot to the robotic pick and place system 118 or the closest adjacent spot to an AMR 112.

. In some embodiments, the communication system 102 may also manage the operation of the robotic pick and place system 118 to cause the robotic pick and place system to pick the one or more items and deliver the one or more items to a delivery location or a robotic packaging and address printing system 114. For example, the communication system 102 may transmit a control indication to cause the robotic pick and place system 118 to retrieve one or more items from an adjacent storage bay of the ASRS 120. The robotic pick and place system 118 may retrieve the one or more items, for example, from the adjacent storage bay and delivery the one or more items to a delivery location. The delivery location may be to a nearby AMR 112, an external output compartment, and/or a designated spot within the robotic packaging and address printing system 114.

. In some embodiments, the communication system 102 may also manage operations of the one or more items from the robotic packaging and address printing system 114 to the one or more AMRs 112. For example, the communication system 102 may transmit a control signal to cause the robotic packaging and address printing system 114 to package one or more items received at a designated spot within the robotic packaging and address printing system 114, such as, from robotic pick and place system 118. In some embodiments, the transmitted control signal may cause the robotic packaging and address printing system 114 to package two or more items from two or more electronic orders associated with the same delivery address in the same package. In some embodiments, the transmitted control signal may indicate the type of packaging the robotic packaging and address printing system 114 should use to package the one or more items. In some embodiments, the transmitted control signal may cause the robotic packaging and address printing system 114 to affix addressee information. In some embodiments, the transmitted control signal may cause the robotic packaging and address printing system 114 to affix one or more warnings, precautions, or other indications related to the one or more packaged items. In some embodiments, the transmitted control signal may cause the one or more packaged items to be delivered to a delivery location, such as to one or more AMRs 112.

**.** In some embodiments, communication system 102 may manage operations of one or more subsystems of the autonomous mobile pico-fulfillment center 100. In some embodiments, the communication system 102 may manage operations associated with the stabilization system 110, such as transmitting a control signal to cause the stabilization system 110 of a portion of at least the ASRS 120 and/or one or more other subsystems of the autonomous mobile pico-fulfillment center 100. In some embodiments, the communication system 102 may transmit a control signal to cause one or more AMRs 112 to transport one or more items to a delivery location for delivery to a user. In some embodiments, the communication system 102 may verify user entered input received from the one or more AMRs and transmit an indication of user is verification to the one or more AMRs. In some embodiments, the communication system 102 may transmit a control signal to cause one or more temperature control units 116 to control the temperature of one or more portions of the ASRS 120. In some embodiments, the communication system 102 may receive a live video stream data object from one or more video capture devices 122. The communication system 102 may transmit the live video stream data object to an external computing entity, such as a WMS.

. In some embodiments, power for the autonomous mobile pico-fulfillment center 100 can be provided by power module 106. In some embodiments, the power module 106 can facilitate distribution of DC and AC power to one or more subsystems of the autonomous mobile pico-fulfillment center 100 that use electrical power. The power module 106 can include a generator that generates power or can receive power from a vehicle or other external source. In some embodiments, the power module 106 may comprise a generator (diesel, fuel-cell, etc.) or batteries configured to power one or more subsystems of the pico-fulfillment center.

. In some embodiments, the autonomous mobile pico-fulfillment center 100 may include a stabilization system 110. Once the trailer is parked, this subsystem, which can be hydraulic or pneumatic, may automatically stabilize and level the entire system to ensure normal operation of the robotic pick and place system 118 and the ASRS 120. In some embodiments, the stabilization system 110 may further stabilize the entire system such that autonomous mobile pico-fulfillment center 100 does not move within the trailer. For example, the stabilization system 110 may raise the mobile platform upon which the one or more subsystems are mounted, such that movement due to for example, the wheels of the mobile platform 108, does not occur.

. In some embodiments, the ASRS 120 can include a temperature control unit 116 configured to control the temperature of one or more portions of the ASRS 120. In some embodiments, the one or more zones are refrigeration sections or zones where items can be refrigerated or frozen. In some embodiments, the one or more zones are heated sections or zones where items can be kept at a preconfigured temperature, within a preconfigured temperature range, and/or above or below a preconfigured temperature threshold. In some embodiments, one or more portions of the ASRS 120 can be temperature configurable. In some embodiments, the temperature control unit 116 comprises one or more devices capable of measuring a temperature associated with the one or more portions of the ASRS 120 and transmitting the measured temperature as one or more temperature data objects to M-WMS 104 and/or communication system 102. In an instance the measured temperature as indicated by a corresponding temperature data object satisfies a preconfigured temperature threshold, the temperature control unit 116 may receive a control indication indicative to actuate one or more corresponding heating or cooling elements associated with the one or more portions of the ASRS 120 until the corresponding temperature data object no longer satisfies the preconfigured temperature threshold. In some embodiments, the M-WMS 104 may be configured to control the temperature control unit 116 based at least in part on the received one or more temperature data objects such that the M-WMS 104 controls or otherwise maintains the preconfigured temperatures for the one or more temperature controlled ASRS 120 portions. In some embodiments, the communication system 102 may be configured to receive temperature control information from a WMS and control or otherwise maintain the preconfigured temperatures for the one or more temperature controlled ASRS 120 portions.

**.** In some embodiments, the autonomous mobile pico-fulfillment center 100 may include a robotic pick and place system 118. In some embodiments, the robotic pick and place system 118 may be programmed and/or controlled by a computing entity, such as communication system 102 or M-WMS 104. In some embodiments, robotic pick and place system 118 may comprise three or more subsystems, including an overhead perception system, a robotic motion control system, and one or more robotic arms. The overhead perception system of the robotic pick and place system 118 may include one or more video capture devices capable of transmitting a video stream data object to the robotic motion control system, communication system 102, and/or M-WMS 104. In some embodiments, the video stream data object may be stored by robotic motion control system, communication system 102, and/or M-WMS 104. In some embodiments, the stored video stream data object may be used, for example, to train one or more machine learning models for one or more tasks, such as, for example, identifying one or more items based on image data. In some embodiments, the overhead perception system may be used to identify the one or more items to be picked such that robotic pick and place system 118 may pick the correct one or more items stored in one or more bays of ASRS 120. The robotic motion control system may be configured to receive a control indication from communication system 102 or M-WMS 104. In some embodiments, the robotic motion control system may receive this control indication based at least in part on the video stream data object transmitted to M-WMS 104 or communication system 102. The robotic motion control system may be configured to control the one or more robotic arms associated with the robotic pick and place system 118. In some embodiments, the robotic motion control system may execute one or more programming instructions, causing the one or more robotic arms to perform one or more motions, actions, and/or functions. For example, the one or more programming instructions may cause the one or more robotic arms to grip, pick-up, move, convey, transport, release, place, flip, and/or otherwise manipulate an item. In some embodiments, each robotic arm may be associated with a robotic device identifier that may uniquely identify the robotic arm. In some embodiments, the robotic motion control system may use this robotic device identifier to identify each of the one or more robotic arms. In some embodiments, the one or more robotic arms may be controlled such that they pick one or more items from the ASRS 120 and move the one or more items to a delivery location. In some embodiments, the one or more robotic arms may move the one or more items to robotic packaging and address printing system 114. In some embodiments, the one or more robotic arms may move the one or more items to an external output compartment accessible to a customer (not shown). In some embodiments, the one or more robotic arms may move the one or more items to one or more AMR's 112 for delivery. The one or more robotic arms may be any suitable type of robotic arm such as an articulated, cartesian, cylindrical, polar, SCARA, and/or a Delta robotic arm.

**.** In some embodiments, the autonomous mobile pico-fulfillment center 100 may include one or more robotic packaging and address printing system 114. A robotic packaging and address printing system 114 may receive one or more items corresponding to one or more electronic orders, for example, from the robotic pick and place system 118. In some embodiments, the robotic packaging and address printing system 114 may package one or more items associated with the same electronic order in the same package. In some embodiments, the robotic packaging and address printing system 114 may package one or more items from two or more electronic orders associated with the same delivery address in the same package. In some embodiments, the robotic packaging and address printing system 114 may package the one or more items using soft packaging. In some embodiments, the robotic packaging and address printing system 114 may package the one or more items within one or more boxes. Regardless of the packaging material, the robotic packaging and address printing system 114 may affix addressee information to the package indicative of at least the delivery address. In some embodiments, the robotic packaging and address printing system 114 may additionally affix one or more warning, precautionary, or other indications / labels related to the one or more packaged items. For example, if the one or more packaged items include a lithium ion battery, the packaging and address printing system 114 may affix an associated warning label indicating the package contains a lithium ion battery. In some embodiments, the robotic packaging and address printing system 114 receives addressee information and/or other relevant packing information from the M-WMS 104 or communication system 102.

. In some embodiments, the autonomous mobile pico-fulfillment center 100 may include one or more AMRs 112. Each AMR may facilitate the delivery of one or more packages containing one or more items from one or more electronic orders from the autonomous mobile pico-fulfillment center 100 to a user. In some embodiments, each AMR 112 may be associated with a robotic device identifier that may uniquely identify the AMR 112. An AMR 112 may be programmed or controlled by a computing entity, such as the M-WMS 104 or communication system 102. For example, the M-WMS 104 or communication system 102 may transmit data to the AMR 112 to cause the AMR 112 to travel along a path and/or to transport one or more items to or from a delivery location. In some embodiments, the AMR 112 may comprise and/or be mounted to one or more item holding mechanisms such that the AMR 112 may transport items from one location to another location, such as from the autonomous mobile pico-fulfillment center 100 to a delivery location.

. In some embodiments, the AMR 112 may implement one or more positioning technologies to identify its position and/or location, and/or interpret location data that it receives, from, for example M-WMS 104, communication system 102, or a delivery location. For example, an AMR may include outdoor positioning aspects, such as a location module adapted to acquire and/or analyze, for example latitude, longitude, altitude, geocode, course, direction, heading, speed, universal time (UTC), date, and/or various other information/data. In some embodiments, the associated sensor can acquire data, sometimes known as ephemeris data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This data can be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information/data can be determined by triangulating the autonomous mobile pico-fulfillment center position in connection with a variety of other systems, including cellular towers, Wi-Fi access points, and/or the like. Similarly, an AMR may include indoor position aspects, such as a location module adapted to acquire, for example, latitude, longitude, altitude, geocode, course, direction, heading, speed, time, date, and/or various other information/data using various position or location technologies including RFID tags, indoor beacons or transmitters, Wi-Fi access points, cellular towers, nearby computing devices (e.g., smartphones, laptops) and/or the like. For instance, such technologies may include the iBeacons, Gimbal proximity beacons, Bluetooth Low Energy (BLE) transmitters, NFC transmitters, and/or the like. These indoor positioning aspects can be used in a variety of settings to determine the location of someone or something to within inches or centimeters.

. In some embodiments, the AMR 112 may implement one or more sensing technologies to identify its operation status and/or its surroundings. For example, an AMR 112 may include one or more proprioceptive sensors and/or one or more exteroceptive sensors. The one or more proprioceptive sensors may measure internal values, parameters, and/or status associated with the AMR 112, such as, but not limited to, battery level, temperature, wheel position, and/or the like. Example proprioceptive sensors may include, but not limited to, potentiometers, speedometers, gyroscopes, acceleration sensor, and/or the like. The one or more exteroceptive sensors may provide measurement and/or observation related to objects and/or environments that may be proximate to the AMR 112. Example exteroceptive sensors may include, but are not limited to, proximity sensors, sonar sensors, distance sensor, infrared (IR) sensor, collision sensor, and/or the like.

. In some embodiments, an AMR 112 may be configured with a user interface to verify the identity of the user receiving the one or more packages. For example, the user at the delivery location may be prompted to enter a confirmation code, order number, or other identifying information that may be used to confirm the identity of the individual. The AMR 112 interface may be in communication with the M-WMS 104 and/or communication system 102 such that M-WMS 104 and/or WMS via communication system 102 may verify the entered input based at least in part on the one or more electronic orders.

. In some embodiments, the autonomous mobile pico-fulfillment center 100 may include an ASRS 120. The ASRS 120 may comprise one or more storage bays housing one or more items. In some embodiments, each storage bay of the ASRS 120 may be associated with a storage identifier that may uniquely identify storage bay. In some embodiments, the ASRS 120 may be configured to, upon receiving a control indication from the M-WMS 104 or communication system 102, retrieve one or more requested items stored in one or more storage bays. For example, if item *X* is stored in storage bay 123, upon receiving a control indication from either M-WMS 104 or communication system 102 for either item *X* or storage bay 123, ASRS 120 may retrieve storage bay 123 containing item *Xfrom* within ASRS 120 and position the storage bay *123* at a configured delivery location. In some embodiments, this delivery location may be the closest adjacent spot to robotic pick and place system 118. The ASRS 120 may be configured by any suitable means to accomplish this retrieval such as by using a vertical carousel, horizontal carousel, vertical lift module, crane, vertical buffer module, robotic shuttle, floor robots, or any other mechanical mechanism.

. In some embodiments, the autonomous mobile pico-fulfillment center 100 may include one or more video capture devices 122. The one or more video capture devices 122 may be mounted on the mobile platform 108, on the exterior of the vehicle, or on the trailer housing the autonomous mobile pico-fulfillment center 100. In some embodiments, the one or more video capture devices 122 may refer to any electronic device configured with a camera and capable of electronically transmitting a live video stream data object. A video stream data object may refer to an electronic data construct that is configured to describe sequential image data generated by a video capture device depicting a visual representation of a surrounding area around or within the autonomous mobile pico-fulfillment center 100. In some embodiments, the one or more video capture devices 122 may be configured to transmit the live video stream data object to the M-WMS 104 or to an associated WMS via communication system 102, where it may be stored for a preconfigured amount of time. In some embodiments, the one or more video capture devices 122 may be configured to detect movement within a predetermined proximity of the autonomous mobile pico-fulfillment center such that the one or more video capture devices 122 will rotate to capture the object causing the detected motion within the field of view of the one or more video capture devices 122. In some embodiments, the one or more video capture devices 122 only transmit the live video stream data object when such movement is detected.

**.** Referring now to **FIG. 2**, there is illustrated a block diagram of a computer 200 operable to execute the functions and operations performed in the described example embodiments. For example, a computing device (e.g., controller or processor associated with the autonomous mobile pico-fulfillment center 100) may contain components as described in **FIG. 2**. The computer 200 can provide networking and communication capabilities between a wired or wireless communication network and a server and/or communication device. In order to provide additional context for various aspects thereof, **FIG.1** and the following discussion are intended to provide a brief, general description of a suitable computing environment in which the various aspects of the embodiments can be implemented to facilitate the establishment of a transaction between an entity and a third party. While the description above is in the general context of computer-executable instructions that can run on one or more computers, those skilled in the art will recognize that the various embodiments also can be implemented in combination with other program modules and/or as a combination of hardware and software.

. Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

. The illustrated aspects of the various embodiments can also be practiced in distributed computing environments where certain tasks are performed by remote processing devices that are linked through a communications network. In a distributed computing environment, program modules can be located in both local and remote memory storage devices.

. Computing devices typically include a variety of media, which can include computer-readable storage media or communications media, which two terms are used herein differently from one another as follows.

. Computer-readable storage media can be any available storage media that can be accessed by the computer and includes both volatile and nonvolatile media, removable and non-removable media. By way of example, and not limitation, computer-readable storage media can be implemented in connection with any method or technology for storage of information such as computer-readable instructions, program modules, structured data, or unstructured data. Computer-readable storage media can include, but are not limited to, RAM, ROM, EEPROM, flash memory or other memory technology, CD-ROM, digital versatile disk (DVD) or other optical disk storage, magnetic cassettes, magnetic tape, magnetic disk storage or other magnetic storage devices, or other tangible and/or non-transitory media which can be used to store desired information. Computer-readable storage media can be accessed by one or more local or remote computing devices, e.g., via access requests, queries or other data retrieval protocols, for a variety of operations with respect to the information stored by the medium.

. Communications media can embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

**.** With reference to **FIG. 2**, implementing various aspects described herein with regards to the end-user device can include a computer 200, the computer 200 including a processing unit 204, a system memory 206 and a system bus 208. The system bus 208 couples system components including, but not limited to, the system memory 206 to the processing unit 204. The processing unit 204 can be any of various commercially available processors. Dual microprocessors and other multi-processor architectures can also be employed as the processing unit 204.

**.** The system bus 208 can be any of several types of bus structure that can further interconnect to a memory bus (with or without a memory controller), a peripheral bus, and a local bus using any of a variety of commercially available bus architectures. The system memory 206 includes read-only memory (ROM) 227 and random access memory (RAM) 212. A basic input/output system (BIOS) is stored in a non-volatile memory 227 such as ROM, EPROM, EEPROM, which BIOS contains the basic routines that help to transfer information between elements within the computer 200, such as during start-up. The RAM 212 can also include a highspeed RAM such as static RAM for caching data.

**.** The computer 200 further includes an internal hard disk drive (HDD) 214 (e.g., EIDE, SATA), which internal hard disk drive 214 can also be configured for external use in a suitable chassis (not shown), a magnetic floppy disk drive (FDD) 216, (e.g., to read from or write to a removable diskette 218) and an optical disk drive 220, (e.g., reading a CD-ROM disk 222 or, to read from or write to other high capacity optical media such as the DVD). The hard disk drive 214, magnetic disk drive 216 and optical disk drive 220 can be connected to the system bus 208 by a hard disk drive interface 224, a magnetic disk drive interface 226 and an optical drive interface 228, respectively. The interface 224 for external drive implementations includes at least one or both of Universal Serial Bus (USB) and IEEE 1394 interface technologies. Other external drive connection technologies are within contemplation of the subject embodiments.

**.** The drives and their associated computer-readable media provide nonvolatile storage of data, data structures, computer-executable instructions, and so forth. For the computer 200 the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer 200, such as zip drives, magnetic cassettes, flash memory cards, cartridges, and the like, can also be used in the example operating environment, and further, that any such media can contain computer-executable instructions for performing the methods of the disclosed embodiments.

**.** A number of program modules can be stored in the drives and RAM 212, including an operating system 230, one or more application programs 232, other program modules 234 and program data 236. All or portions of the operating system, applications, modules, and/or data can also be cached in the RAM 212. It is to be appreciated that the various embodiments can be implemented with various commercially available operating systems or combinations of operating systems.

**.** A user can enter commands and information into the computer 200 through one or more wired/wireless input devices, e.g., a keyboard 238 and a pointing device, such as a mouse 240. Other input devices (not shown) may include a microphone, an IR remote control, a joystick, a game pad, a stylus pen, touch screen, or the like. These and other input devices are often connected to the processing unit 204 through an input device interface 242 that is coupled to the system bus 208, but can be connected by other interfaces, such as a parallel port, an IEEE 1394 serial port, a game port, a USB port, an IR interface, etc.

**.** A monitor 244 or other type of display device is also connected to the system bus 208 through an interface, such as a video adapter 246. In addition to the monitor 244, a computer 200 typically includes other peripheral output devices (not shown), such as speakers, printers, etc.

**.** The computer 200 can operate in a networked environment using logical connections by wired and/or wireless communications to one or more remote computers, such as a remote computer(s) 248. The remote computer(s) 248 can be a workstation, a server computer, a router, a personal computer, portable computer, microprocessor-based entertainment device, a peer device or other common network node, and typically includes many or all of the elements described relative to the computer, although, for purposes of brevity, only a memory/storage device 250 is illustrated. The logical connections depicted include wired/wireless connectivity to a local area network (LAN) 252 and/or larger networks, e.g., a wide area network (WAN) 254. Such LAN and WAN networking environments are commonplace in offices and companies, and facilitate enterprise-wide computer networks, such as intranets, all of which may connect to a global communications network, e.g., the Internet.

. When used in a LAN networking environment, the computer 200 is connected to the local network 252 through a wired and/or wireless communication network interface or adapter 256. The adapter 256 may facilitate wired or wireless communication to the LAN 252, which may also include a wireless access point disposed thereon for communicating with the wireless adapter 256.

. When used in a WAN networking environment, the computer 200 can include a modem 258, or is connected to a communications server on the WAN 254, or has other means for establishing communications over the WAN 254, such as by way of the Internet. The modem 258, which can be internal or external and a wired or wireless device, is connected to the system bus 208 through the input device interface 242. In a networked environment, program modules depicted relative to the computer, or portions thereof, can be stored in the remote memory/storage device 250. It will be appreciated that the network connections shown are exemplary and other means of establishing a communications link between the computers can be used.

. The computer is operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, restroom), and telephone. This includes at least Wi-Fi and Bluetooth™ wireless technologies. Thus, the communication can be a predefined structure as with a conventional network or simply an ad hoc communication between at least two devices.

**.** Wi-Fi, or Wireless Fidelity, allows connection to the Internet from a couch at home, a bed in a hotel room, or a conference room at work, without wires. Wi-Fi is a wireless technology similar to that used in a cell phone that enables such devices, e.g., computers, to send and receive data indoors and out; anywhere within the range of a base station. Wi-Fi networks use radio technologies called IEEE802.11 (a, b, g, n, *etc*.) to provide secure, reliable, fast wireless connectivity. A Wi-Fi network can be used to connect computers to each other, to the Internet, and to wired networks (which use IEEE802.3 or Ethernet). Wi-Fi networks operate in the unlicensed 2.4 and 5 GHz radio bands, at an 11 Mbps (802.11b) or 54 Mbps (802.11a) data rate, for example, or with products that contain both bands (dual band), so the networks can provide real-world performance similar to the basic "10BaseT" wired Ethernet networks used in many offices.

. As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor also can be implemented as a combination of computing processing units.

**.** In the subject specification, terms such as "store," "data store," "data storage," "database," "repository," "queue", and substantially any other information storage component relevant to operation and functionality of a component, refer to "memory components," or entities embodied in a "memory" or components comprising the memory. It will be appreciated that the memory components described herein can be either volatile memory or nonvolatile memory, or can comprise both volatile and nonvolatile memory. In addition, memory components or memory elements can be removable or stationary. Moreover, memory can be internal or external to a device or component, or removable or stationary. Memory can comprise various types of media that are readable by a computer, such as hard-disc drives, zip drives, magnetic cassettes, flash memory cards or other types of memory cards, cartridges, or the like.

. By way of illustration, and not limitation, nonvolatile memory can comprise read only memory (ROM), programmable ROM (PROM), electrically programmable ROM (EPROM), electrically erasable ROM (EEPROM), or flash memory. Volatile memory can comprise random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

. In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated example aspects of the embodiments. In this regard, it will also be recognized that the embodiments comprise a system as well as a computer-readable medium having computer-executable instructions for performing the acts and/or events of the various methods.

. Computing devices typically comprise a variety of media, which can comprise computer-readable storage media and/or communications media, which two terms are used herein differently from one another as follows. Computer-readable storage media can be any available storage media that can be accessed by the computer and comprises both volatile and nonvolatile media, removable and non-removable media. By way of example, and not limitation, computer-readable storage media can be implemented in connection with any method or technology for storage of information such as computer-readable instructions, program modules, structured data, or unstructured data.

. Computer-readable storage media can include, but are not limited to, random access memory (RAM), read only memory (ROM), electrically erasable programmable read only memory (EEPROM), flash memory or other memory technology, solid state drive (SSD) or other solid-state storage technology, compact disk read only memory (CD ROM), digital versatile disk (DVD), Blu-ray disc or other optical disk storage, magnetic cassettes, magnetic tape, magnetic disk storage or other magnetic storage devices or other tangible and/or non-transitory media which can be used to store desired information.

. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se. Computer-readable storage media can be accessed by one or more local or remote computing devices, e.g., via access requests, queries or other data retrieval protocols, for a variety of operations with respect to the information stored by the medium.

. On the other hand, communications media typically embody computer-readable instructions, data structures, program modules or other structured or unstructured data in a data signal such as a modulated data signal, e.g., a carrier wave or other transport mechanism, and comprises any information delivery or transport media. The term "modulated data signal" or signals refers to a signal that has one or more of its characteristics set or changed in such a manner as to encode information in one or more signals. By way of example, and not limitation, communications media comprise wired media, such as a wired network or direct-wired connection, and wireless media such as acoustic, RF, infrared and other wireless media

. Further, terms like "user equipment," "user device," "mobile device," "mobile," station," "access terminal," "terminal," "handset," and similar terminology, generally refer to a wireless device utilized by a subscriber or user of a wireless communication network or service to receive or convey data, control, voice, video, sound, gaming, or substantially any data-stream or signaling-stream. The foregoing terms are utilized interchangeably in the subject specification and related drawings. Likewise, the terms "access point," "node B," "base station," "evolved Node B," "cell," "cell site," and the like, can be utilized interchangeably in the subject application, and refer to a wireless network component or appliance that serves and receives data, control, voice, video, sound, gaming, or substantially any data-stream or signaling-stream from a set of subscriber stations. Data and signaling streams can be packetized or frame-based flows. It is noted that in the subject specification and drawings, context or explicit distinction provides differentiation with respect to access points or base stations that serve and receive data from a mobile device in an outdoor environment, and access points or base stations that operate in a confined, primarily indoor environment overlaid in an outdoor coverage area. Data and signaling streams can be packetized or frame-based flows.

. Furthermore, the terms "user," "subscriber," "customer," "consumer," and the like are employed interchangeably throughout the subject specification, unless context warrants particular distinction(s) among the terms. It should be appreciated that such terms can refer to human entities, associated devices, or automated components supported through artificial intelligence (e.g., a capacity to make inference based on complex mathematical formalisms) which can provide simulated vision, sound recognition and so forth. In addition, the terms "wireless network" and "network" are used interchangeable in the subject application, when context wherein the term is utilized warrants distinction for clarity purposes such distinction is made explicit.

. Moreover, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

. In addition, while a particular feature may have been disclosed with respect to only one of several implementations, such feature may be combined with one or more other features of the other implementations as may be desired and advantageous for any given or particular application. Furthermore, to the extent that the terms "includes" and "including", and variants thereof are used in either the detailed description or the claims, these terms are intended to be inclusive in a manner similar to the term "comprising."

**.** FIG. 3 is a flowchart diagram of an example process 300 for the fulfilling one or more electronic orders using an autonomous mobile pico-fulfillment center 100. Via the various steps/operations of the process 300, the autonomous mobile pico-fulfillment center 100 can accurately and quickly deliver one or more items from one or more electronic orders.

**.** The process 300 begins at step/operation 302 in an instance in which the communication system 102 of the autonomous mobile pico-fulfillment center 100 receives one or more navigational indication indicative of one or more deployment points. In some embodiments, the one or more navigational indications further comprise one or more navigational directions to reach the one or more deployment points. In some embodiments, communications system 102 may transmit the one or more navigational indications to M-WMS 104 such that M-WMS 104 may control the distribution and/or one or more associated operations indicated by the one or more navigational indications. In some embodiments, upon receiving the one or more navigational indications and/or directions, a fully autonomous vehicle loaded with the autonomous mobile pico-fulfillment center 100 may autonomously drive itself to one of the one or more deployment points. The routing information indicative of a route to reach a deployment point may be provided by the one or more navigational indications or by an external routing software. In some embodiments, communication system 102 or M-WMS 104 may provide one of the one or more deployment points to a driver via an associated driver interface such that that the driver may manually drive the vehicle loaded with the autonomous mobile pico-fulfillment center 100 a deployment point.

**.** In some embodiments, the one or more navigational indications further comprise a plurality of deployment points. In some embodiments, the one or more navigational indications may be further indicative of a time the autonomous mobile pico-fulfillment center 100 is to be operated at a particular deployment point. For example, communication system 102 or M-WMS 104 may receive a navigation indication indicative of operating at deployment point *X* from *8:00* to *13:00* and deployment point *Y* from *13:30* to *16:00.* In some embodiments, the one or more navigational indications may also consider transit time such that the time associated with each deployment point is only indicative of the time the autonomous mobile pico-fulfillment center 100 is operational at the deployment point.

. In some example embodiments, the autonomous mobile pico-fulfillment center 100 may dynamically receive one or more navigational indications. In some examples, the one or more navigational indications may be dynamically set based at least in part on consumer demand, received electronic orders, or the like. In other examples, the one or more navigation indications may be dynamically set based on a model trained to analyze consumer behavior, orders, pickups, and/or the like.

. In some embodiments, the autonomous mobile pico-fulfillment center 100 may receive one or more return indications indicative for autonomous mobile pico-fulfillment center 100 to return to an associated distribution center. In some embodiments, the one or more return indications may be received periodically, such as daily, weekly, or biweekly. For example, the autonomous mobile pico-fulfillment center 100 may return to an associated distribution center weekly for restocking and/or routine system maintenance.

. In some embodiments, the autonomous mobile pico-fulfillment center 100 may dynamically receive one or more return indication. In some examples, the one or more return indications may be dynamically set based at least in part on anticipated consumer demand, received electronic orders, current inventory as described by one or more associated inventory data objects, and the like.

. At step/operation 304, the communication system 102 may receive one or more electronic orders. The one or more electronic orders may be indicative of one or more items to deliver. In some embodiments, the one or more electronic orders may be received only while the autonomous mobile pico-fulfillment center 100 is parked and is operational. Additionally or alternatively, the one or more electronic orders may be received while the autonomous mobile pico-fulfillment center 100 is in transit to the deployment point and stored in an associated memory 206 until the autonomous mobile pico-fulfillment center 100 is operational. In some embodiments, the communication system 102 may transmit the one or more electronic orders to M-WMS 104 such that M-WMS 104 stores the one or more electronic orders in an associated memory, such as memory 206. In some embodiments, the one or more electronic orders may be received from a WMS. In some embodiments, the one or more electronic orders may be received from an external interface associated with the autonomous mobile pico-fulfillment center 100.

. At step/operation 306, the communication system 102 of the autonomous mobile pico-fulfillment center 100 may receive one or more communications indicative to generate a control indication to cause the ASRS 120 to perform delivery of one or more items from the one or more electronic orders to robotic pick and place system 118. In some embodiments, the control indication may be generated locally using the M-WMS 104. In some embodiments, the control indication may be generated at an associated WMS and received via communication system 102. Regardless of where the control indication is generated, the control indication is configured to cause the ASRS 120 to perform delivery of the one or more items. In some embodiments, the control indication may be generated immediately upon receiving the one or more electronic orders.

**.** In some embodiments, a completion time data object may also be generated via the WMS or M-WMS 104. The completion time data object may be indicative of an estimated completion time to fulfill the one or more electronic orders. In some embodiments, the completion time data object may be transmitted via communication system 102, M-WMS 104, or the like to a remote computer 248 for display to a user associated with the one or more electronic orders. In some embodiments, the completion time data object may be determined based at least in part on the number of received electronic orders.

**.** In some embodiments, the control indication configured to cause the delivery one or more items of the one or more electronic orders to robotic pick and place system, may be generated once confirmation is received that a user is at a delivery location. In this way, the autonomous mobile pico-fulfillment center 100 may efficiently prioritize fulfillment of the one or more electronic orders. For example, electronic orders *X, Y,* and Z, may be received by communication system 102 such that electronic order Xis received first and Z is received last. The communication system 102 or M-WMS 104 may delay generating a control signal to cause the ASRS 120 to deliver the one or more items from electronic order *X* until the communication system 102 receives a confirmation that a user is at the delivery location. As such, in an instance a confirmation that a user associated with electronic order Z is at a delivery location is received first, the communication system 102 or M-WMS 104 may prioritize fulfillment of the one or more items associated with electronic order Z and generate a control indication to cause the ASRS 120 to deliver the one or more items associated with electronic order Z to the robotic pick and place system 118.

**.** At step/operation 308, the communication system 102 of the autonomous mobile pico-fulfillment center 100 may receive one or more communications indicative to generate a control indication to cause the robotic pick and place system 118 to pick the one or more items from the one or more electronic orders and place the one or more items in a delivery location. In some embodiments, the control indication may be generated locally using the M-WMS 104. The robotic pick and place system 118 grip, pick-up, move, convey, transport, release, place, flip, and/or otherwise manipulate an item to the delivery location. The delivery location may be any suitable delivery location that either directly delivers the one or more items directly to a user or delivers the one or more items to an additional subsystem for further processing. In some embodiments, the delivery location is an external delivery location accessible to a user. For example, autonomous mobile pico-fulfillment center 100 may have an external physical input interface configured to receive input and an external output compartment configured to deliver one or more items from one or more electronic orders. In some embodiments, the trailer housing the autonomous mobile pico-fulfillment center 100 may be configured with the physical input interface that may be in communication with the autonomous mobile pico-fulfillment center 100 via communication system 102. In some embodiments, the trailer housing the mobile pico-fulfillment center 100 may configured with an output compartment capable of receiving the one or more items from the robotic pick and place system 118 and delivering the one or more items to an associated user. In some embodiments, the physical input interface may display one or more available items for purchase within the autonomous mobile pico-fulfillment center 100. In some embodiments, the physical input interface may receive a code, confirmation number, order number, or the like indicative of one or more items from one or more associated electronic orders to deliver.

**.** In some embodiments, step/operation 308 can be performed in accordance with the process depicted in FIG. 4. The process depicted in FIG. 4 begins at step/operation 402. The delivery location described with reference to step/operation 308 may be to a robotic packaging and address printing system 114. In some embodiments, the communication system 102 may receive one or more communications to generate a control indication to cause the robotic pick and place system 118 to pick the one or more items from the one or more electronic orders and place the one or more items within robotic packaging and address printing system 114. In some embodiments, the control indication may be generated locally using the M-WMS 104. Step/operation 402 is substantially similar to step/operation 308.

**.** At step/operation 404, the communication system 102 may receive one or more communications indicative to generate a control indication to cause the robotic packaging and address printing system 114 to package the one or more items received from the robotic pick and place system 118 and affix addressee information to said package. In some embodiments, the control indication may be generated locally using M-WMS 104. The robotic packaging and address printing system 114 may package one or more items associated with the same electronic item order within the same package. In some embodiments, the robotic packaging and address printing system 114 may package one or more items from two or more electronic orders associated with the same delivery address in the same package. In some embodiments, the robotic packaging and address printing system 114 may package the one or more items using soft packaging. In some embodiments, the robotic packaging and address printing system 114 may package the one or more items within one or more boxes. In some embodiments, the type of packaging may be determined by the M-WMS 104 or communication system 102 based at least in part on the one or more items associated type.

. In some embodiments, communication system 102 or M-WMS 104 may transmit one or more delivery indication data objects to the robotic packaging and address printing system 114. The one or more delivery indication data objects may be indicative of at least an associated user's name and delivery address. The robotic packaging and address printing system 114 may affix addressee information based at least in part on the received delivery indication data object. In some embodiments, the one or more delivery indication data objects may further comprise an item label data object indicating one or more warnings, precautions, or other indications related to the one or more packaged items. For example, if the one or more items include a lithium ion battery, the robotic packaging and address printing system 114 may affix an associated warning label indicating the package contains a lithium ion battery.

. In some embodiments, step/operation 308 and/or step operation 404 can be also performed in accordance with the process depicted in FIG. 5. The process depicted in FIG. 5 begins at step/operation 502. The communication system 102 may receive an electronic delivery request data object indicative to deliver one or more items from one or more electronic orders to a delivery location. In some embodiments, once communication system 102 receives the electronic delivery request, the various systems of the autonomous mobile pico-fulfillment center 100 may perform step/operations associated with FIGS. 3 and 4 such that the one or more items from the one or more electronic orders in the delivery request data object have been packaged and affixed with addressee information.

. At step/operation 504, the communication system 102 may receive one or more communications indicative to generate a control indication to cause the robotic packaging and address printing system 114 to deliver the packaged one or more items as indicated by the electronic delivery request data object to an AMR 112. In some embodiments, the control indication may be generated locally using the M-WMS 104. The robotic packaging and address printing system 114 may perform the delivery of the one or more packaged items to an AMR 112 using any suitable methods. For example, the robotic packaging and address system may be configured with one or more robotic arms, one or more conveyor belts, or any other mechanical system to deliver the one or more packaged items to the AMR 112.

**.** At step/operation 506, communication system 102 may receive one or more communications indicative to generate a control indication to cause the AMR 112 to deliver the one or more items from the electronic delivery request data object to a delivery location. In some embodiments, the control indication may be generated locally using the M-WMS 104. In some embodiments, the AMR 112 may implement one or more positioning technologies to identify its position and/or location, and/or interpret the delivery location that it receives, from, for example M-WMS 104, communication system 102, or a delivery location. For example, an AMR may include outdoor positioning aspects, such as a location module adapted to acquire and/or analyze, for example latitude, longitude, altitude, geocode, course, direction, heading, speed, universal time (UTC), date, and/or various other information/data. In some embodiments, the associated sensor can acquire data, sometimes known as ephemeris data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This data can be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information/data can be determined by triangulating the autonomous mobile pico-fulfillment center position in connection with a variety of other systems, including cellular towers, Wi-Fi access points, and/or the like. Similarly, an AMR may include indoor position aspects, such as a location module adapted to acquire, for example, latitude, longitude, altitude, geocode, course, direction, heading, speed, time, date, and/or various other information/data using various position or location technologies including RFID tags, indoor beacons or transmitters, Wi-Fi access points, cellular towers, nearby computing devices (e.g., smartphones, laptops) and/or the like. For instance, such technologies may include the iBeacons, Gimbal proximity beacons, Bluetooth Low Energy (BLE) transmitters, NFC transmitters, and/or the like. These indoor positioning aspects can be used in a variety of settings to determine the location of someone or something to within inches or centimeters.

. In some embodiments, the AMR 112 may implement one or more sensing technologies to identify its operation status and/or its surroundings. For example, an AMR 112 may include one or more proprioceptive sensors and/or one or more exteroceptive sensors. The one or more proprioceptive sensors may measure internal values, parameters, and/or status associated with the AMR 112, such as, but not limited to, battery level, temperature, wheel position, and/or the like. Example proprioceptive sensors may include, but not limited to, potentiometers, speedometers, gyroscopes, acceleration sensor, and/or the like. The one or more exteroceptive sensors may provide measurement and/or observation related to objects and/or environments that may be proximate to the AMR 112. Example exteroceptive sensors may include, but are not limited to, proximity sensors, sonar sensors, distance sensor, infrared (IR) sensor, collision sensor, and/or the like.

. In some embodiments, the delivery location may be indicated in a variety of ways, such that the AMR 112 is able to navigate to said delivery location. For example, the one or more delivery locations may each be associated with a beacon such that the beacon signals its location to the AMR 112, such as via Bluetooth. Each individual beacon may be associated with a particular delivery location, such that the AMR 112, communication system 102, and/or the M-WMS 104 may differentiate individual delivery locations based at least in part on the delivery location's associated beacon.

. In some embodiments, the AMR 112 may be configured with a user interface to verify the identity of the user receiving the one or more packages at the delivery location. For example, the user at the delivery location may be prompted to enter a confirmation code, order number, or other identifying information that may be used to confirm the identity of the user. The AMR 112 interface may be in communication with the M-WMS 104 and/or communication system 102 such that M-WMS 104 and/or communication system 102 may verify the entered user input based at least in part on the corresponding information from the one or more electronic orders.

. FIG. 6 is a flowchart diagram of an example process 600 for updating an associated item inventory. Via the various steps/operations of the process 600, the autonomous mobile pico-fulfillment center 100 maintains and accurate and up-to-date inventory of the one or more items available as well as the monitors the demand of certain items.

. The process 600 begins at step/operation 602 when the communication system 102 or M-WMS 104 updates an associated inventory data object for the one or more items from the one or more electronic orders. In some embodiments, the associated inventory data object may be managed locally, for example, by the M-WMS 104. In some embodiments, the associated inventory data object may be managed in a cloud-computing environment, for example, by communication system 102. In some embodiments, the communication system 102 or M-WMS 104 may update the associated inventory data object for the one or more items from the one or more electronic orders upon receiving the one or more electronic orders. In some embodiments, the autonomous mobile pico-fulfillment center 100 may update the associated inventory data object for the one or more items from the one or more electronic orders after fulfillment of the one or more electronic orders.

. In some embodiments, the one or more associated inventory data objects may be indicative of an item inventory with respect to time and location. For example, an associated inventory data object may indicate that autonomous mobile pico-fulfillment center 100 contained 100 units of item *X* at 12:00 and was positioned at deployment location 123. Additionally, an associated inventory data object may indicate that autonomous mobile pico-fulfillment center 100 contained 75 units of item *X* at 13:00 and was positioned at deployment location *123.* In this way, item transaction, fulfillment, and the like may be monitored as a function of time. The one or more associated inventory data objects may be processed, for example, by a WMS to determine future item inventory, deployment points, deployment point times, and the like.

. In some embodiments the associated inventory data object for one or more items may be periodically updated to reflect changes in the number of available items. In some embodiments, the associated inventory data object for one or more items may be updated upon delivery of one or more items. In some embodiments, in an instance the associated inventory data object satisfies a preconfigured inventory threshold, an associated warehouse management system may perform one or more corresponding actions. For example, once an associated inventory data object satisfies a preconfigured inventory threshold, the associated warehouse management system may no longer offer the item associated with the inventory data object for sale, trigger a reorder of a plurality of the items for a distribution center, and/or generate a return indication indicative for the autonomous mobile fulfillment center 100 to return to an associated distribution center.

. The above descriptions of various embodiments of the subject disclosure and corresponding figures and what is described in the Abstract, are described herein for illustrative purposes, and are not intended to be exhaustive or to limit the disclosed embodiments to the precise forms disclosed. It is to be understood that one of ordinary skill in the art may recognize that other embodiments having modifications, permutations, combinations, and additions can be implemented for performing the same, similar, alternative, or substitute functions of the disclosed subject matter, and are therefore considered within the scope of this disclosure. Therefore, the disclosed subject matter should not be limited to any single embodiment described herein, but rather should be construed in breadth and scope in accordance with the claims below.

. In any of the above aspects, the various features may be implemented in hardware, or as software modules running on one or more processors/computers.

. The invention also provides a computer program or a computer program product comprising instructions which, when executed by a computer, cause the computer to carry out any of the methods/method steps described herein, and a (non-transitory) computer-readable medium comprising instructions which, when executed by a computer, cause the computer to carry out any of the methods/method steps described herein. A computer program embodying the invention may be stored on a (non-transitory) computer-readable medium, or it could, for example, be in the form of a signal such as a downloadable data signal provided from an Internet website, or it could be in any other form.

The present disclosure extends to the following numbered statements:
1. An apparatus for fulfillment of electronic orders using an autonomous pico-fulfillment center, the apparatus comprising:
   a mobile platform, wherein the mobile platform is configured to facilitate the movement of the autonomous mobile fulfillment center;
   an automated storage and retrieval system mounted on the mobile platform, wherein the automated storage and retrieval system is configured to facilitate at least the storage or delivery of one or more items;
   a communication system mounted on the mobile platform, wherein the communication system is configured to receive one or more communications from a warehouse management system; and
   a robotic pick and place system mounted on the mobile platform, wherein the robotic pick and place system is configured to pick the one or more items from the automated storage and retrieval system and place the one or more items in a delivery location.
2. The apparatus of statement 1, the apparatus further comprising a mobile warehouse management system mounted on the mobile platform, wherein mobile warehouse management system receives the one or more communications from the warehouse management system via the communication system and is configured to facilitate the delivery of one or more items from the automated storage and retrieval system.
3. The apparatus of statement 1 or 2, wherein the communication system comprises a 5G communication system configured to facilitate the delivery of one or more items from the automated storage and retrieval system via 5G cloud services.
4. The apparatus of any of statements 1 to 3, the apparatus further comprising a power module mounted on the mobile platform, wherein the power module is configured to supply power to one or more components of the autonomous pico-fulfillment center.
5. The apparatus of any of statements 1 to 4, the apparatus further comprising a robotic packaging and address system mounted on the mobile platform, wherein the robotic packaging and address system is configured to receive the one or more items from the robotic pick and place system, package the one or more items, and affix addressee information to said package.
6. The apparatus of any of statements 1 to 5, the apparatus further comprising one or more autonomous mobile robots, wherein the autonomous mobile robots are configured to deliver the one or more items to a delivery location.
7. The apparatus of any of statements 1 to 6, the apparatus further comprising a stabilization system mounted on the mobile platform, wherein the stabilization system is configured to stabilize at least the automated storage and retrieval system.
8. The apparatus of any of statements 1 to 7, wherein at least a portion of the automated storage and retrieval system is temperature controlled.
9. The apparatus of any of statements 1 to 8, the apparatus further comprising one or more video capture devices mounted on the mobile platform, wherein the one or more video capture devices are configured to transmit a video stream of a surrounding area around or within the autonomous mobile pico-fulfillment center.
10. The apparatus of any of statements 1 to 9, wherein the mobile platform comprises a set of wheels to facilitate the movement of the autonomous mobile pico-fulfillment center.
11. A method for fulfillment of electronic orders using an autonomous pico-fulfillment center, the method comprising:
   receiving, via a communication system, one or more navigational indications indicative of one or more deployment points;
   receiving, via a communication system, one or more electronic orders from a warehouse management system, wherein the one or more electronic orders comprise one or more items to deliver and the one or more electronic orders received are based at least in part on the one or more deployment points;
   generating a control indication to cause an automated storage and retrieval system to perform delivery of one or more items from the one or more electronic orders to the robotic pick and place system; and
   generating a control indication to cause the robotic pick and place system to pick the one or more items from the one or more electronic orders and place the one or more items in a delivery location.
12. The method of statement 11, wherein the one or more navigational indications are further indicative of one or more navigational directions to reach the one or more deployment points.
13. The method of statement 11 or 12, further comprising generating a control indication to cause a robotic packaging and address system to receive the one or more items from the robotic pick and place system, package the one or more items, and affix addressee information to said package.
14. The method of any of statements 11 to 13, further comprising generating a control indication to cause a stabilization system to at least a) actuate and stabilize at least the automated storage and retrieval system or b) disengage.
15. The method of any of statements 11 to 14, further comprising:
   receiving, via the communication system, an electronic delivery request indicative to deliver the one or more items corresponding to one or more electronic orders to a delivery location;
   generating a control indication to cause an autonomous mobile robot to deliver the one or more items corresponding to one or more electronic orders to the delivery location.
16. The method of any of statements 11 to 15, further comprising:
   updating an associated inventory data object for the one or more items associated with the one or more electronic orders; and
   transmitting the associated inventory data object for the one or more items to the warehouse management system.
17. The method of any of statements 11 to 16, further comprising generating a control signal to cause at least a portion of the automated storage and retrieval system to maintain a configured temperature.
18. A computer program product configured for fulfillment of electronic orders using an autonomous pico-fulfillment center, the computer program product comprising at least one non-transitory computer-readable storage medium having computer executable program code instructions therein, the computer executable program code instructions comprising program code instructions configured, upon execution, to:
   receive, via a communication system, one or more navigational indications indicative of one or more deployment points;
   receive, via a communication system, one or more electronic orders from a warehouse management system, wherein the one or more electronic orders comprise one or more items to deliver and the one or more electronic orders received are based at least in part on the one or more deployment points;
   generate a control indication to cause an automated storage and retrieval system to perform delivery of one or more items from the one or more electronic orders to a robotic pick and place system; and
   generate a control indication to cause the robotic pick and place system to pick the one or more items from the one or more electronic orders and place the one or more items in a delivery location.
19. The computer program product of statement 18, wherein the one or more navigational indications are further indicative of one or more navigational directions to reach the one or more deployment points.
20. The computer program product of statement 18 or 19, wherein the computer program code instructions further comprise program code instructions configured to, upon execution, to generate a control indication to cause a robotic packaging and address system to receive the one or more items from the robotic pick and place system, package the one or more items, and affix addressee information to said package.
21. The computer program product of any of statements 18 to 20, wherein the computer program code instructions further comprise program code instructions configured to, upon execution, to further generate a control indication to cause a stabilization system to at least a) actuate and stabilize at least the automated storage and retrieval system or b) disengage.
22. The computer program product of any of statements 18 to 21, wherein the computer program code instructions further comprise program code instructions configured to, upon execution, to:
   receive, via the communication system, an electronic delivery request indicative to deliver the one or more items corresponding to one or more electronic orders to a delivery location; and
   generate a control indication to cause an autonomous mobile robot to deliver the one or more items corresponding to one or more electronic orders to the delivery location.
23. The computer program product of any of statements 18 to 22, wherein the computer program code instructions further comprise program code instructions configured to, upon execution, to:
   update an associated inventory data object for the one or more items associated with the one or more electronic orders; and
   transmit the associated inventory data object for the one or more items to the warehouse management system.
24. The computer program product of any of statements 18 to 23, wherein the computer program code instructions further comprise program code instructions configured to, upon execution, to, generate a control signal to cause at least a portion of the automated storage and retrieval system to maintain a configured temperature.
25. An apparatus for fulfilling electronic orders using an autonomous mobile fulfillment center, the apparatus comprising:
   a communication system;
   an automated storage and retrieval system;
   a robotic pick and place system; and
   at least one processing component configured to:
      receive, via a communication system, one or more navigational indications indicative of one or more deployment points;
      receive, via a communication system, one or more electronic orders from a warehouse management system, wherein the one or more electronic orders comprise one or more items to deliver and the one or more electronic orders received are based at least in part on the one or more deployment points;
      generate a control indication to cause an automated storage and retrieval system to perform delivery of one or more items from the one or more electronic orders to a robotic pick and place system; and
      generate a control indication to cause the robotic pick and place system to pick the one or more items from the one or more electronic orders and place the one or more items in a delivery location.
26. The apparatus of statement 25, wherein the one or more navigational indications are further indicative of one or more navigational directions to reach the one or more deployment points.
27. The apparatus of statement 25 or 26, the apparatus further comprising:
   a robotic packaging and address system, and
   wherein the at least one processing component is further configured to generate a control indication to cause the robotic packaging and address system to receive the one or more items from the robotic pick and place system, package the one or more items, and affix addressee information to said package.
28. The apparatus of any of statements 25 to 27, the apparatus further comprising:
   a stabilization system, and
   wherein the at least one processing component is further configured to generate a control indication to cause the stabilization system to at least a) actuate and stabilize at least the automated storage and retrieval system or b) disengage.
29. The apparatus of any of statements 25 to 28, the apparatus further comprising:
   one or more autonomous mobile robots, and
   wherein the at least one processing component is further configured to:
      receive, via the communication system, an electronic delivery request indicative to deliver the one or more items corresponding to one or more electronic orders to a delivery location; and
      generate a control indication to cause an autonomous mobile robot to deliver the one or more items corresponding to one or more electronic orders to the delivery location.
30. The apparatus of any of statements 25 to 29, wherein the at least one processing component is further configured to:
   update an associated inventory data object for the one or more items associated with the one or more electronic orders; and
   transmit the associated inventory data object for the one or more items to the warehouse management system.
31. The apparatus of any of statements 25 to 30, wherein the at least one processing component is further configured to generate a control signal to cause at least a portion of the automated storage and retrieval system to maintain a configured temperature.
32. A vehicle apparatus for fulfillment of electronic orders using an autonomous pico-fulfillment center, the apparatus comprising:
   a mobile platform, wherein the mobile platform is configured to facilitate the movement of the autonomous mobile fulfillment center;
   an automated storage and retrieval system mounted on the mobile platform, wherein the automated storage and retrieval system is configured to facilitate at least the storage or delivery of one or more items;
   a communication system mounted on the mobile platform, wherein the communication system is configured to receive one or more communications from a warehouse management system; and
   a robotic pick and place system mounted on the mobile platform, wherein the robotic pick and place system is configured to pick the one or more items from the automated storage and retrieval system and place the one or more items in a delivery location.
33. The vehicle apparatus of statement 32, the vehicle apparatus further comprising a mobile warehouse management system mounted on the mobile platform, wherein mobile warehouse management system receives the one or more communications from the warehouse management system via the communication system and is configured to facilitate the delivery of one or more items from the automated storage and retrieval system.
34. The vehicle apparatus of statement 32 or 33, wherein the communication system comprises a 5G communication system configured to facilitate the delivery of one or more items from the automated storage and retrieval system via 5G cloud services.
35. The vehicle apparatus of any of statements 32 to 34, the vehicle apparatus further comprising a power module mounted on the mobile platform, wherein the power module is configured to supply power to one or more components of the autonomous pico-fulfillment center.
36. The vehicle apparatus of any of statements 32 to 35, the vehicle apparatus further comprising a robotic packaging and address system mounted on the mobile platform, wherein the robotic packaging and address system is configured to receive the one or more items from the robotic pick and place system, package the one or more items, and affix addressee information to said package.
37. The vehicle apparatus of any of statements 32 to 36, the vehicle apparatus further comprising one or more autonomous mobile robots, wherein the autonomous mobile robots are configured to deliver the one or more items to a delivery location.
38. The vehicle apparatus of any of statements 32 to 37, the vehicle apparatus further comprising a stabilization system mounted on the mobile platform, wherein the stabilization system is configured to stabilize at least the automated storage and retrieval system.
39. The vehicle apparatus of any of statements 32 to 38, wherein at least a portion of the automated storage and retrieval system is temperature controlled.
40. The vehicle apparatus of any of statements 32 to 39, the vehicle apparatus further comprising one or more video capture devices mounted on the mobile platform or the vehicle apparatus, wherein the one or more video capture devices are configured to transmit a video stream of a surrounding area around or within the autonomous mobile pico-fulfillment center.
41. The vehicle apparatus of any of statements 32 to 40, wherein the mobile platform comprises a set of wheels to facilitate the movement of the autonomous mobile pico-fulfillment center.
42. The vehicle apparatus of any of statements 32 to 41, wherein the vehicle apparatus further comprises:
   an external input interface, wherein the external input interface is in configured to receive a user input; and
   an output compartment, wherein the output compartment is configured to receive the one or more items from the one or more electronic orders and deliver the one or more items.

## Claims

1. An apparatus for fulfillment of electronic orders using an autonomous pico-fulfillment center, the apparatus comprising:
a mobile platform, wherein the mobile platform is configured to facilitate the movement of the autonomous mobile fulfillment center;
an automated storage and retrieval system mounted on the mobile platform, wherein the automated storage and retrieval system is configured to facilitate at least the storage or delivery of one or more items;
a communication system mounted on the mobile platform, wherein the communication system is configured to receive one or more communications from a warehouse management system; and
a robotic pick and place system mounted on the mobile platform, wherein the robotic pick and place system is configured to pick the one or more items from the automated storage and retrieval system and place the one or more items in a delivery location.

2. The apparatus of claim 1, the apparatus further comprising a mobile warehouse management system mounted on the mobile platform, wherein mobile warehouse management system receives the one or more communications from the warehouse management system via the communication system and is configured to facilitate the delivery of one or more items from the automated storage and retrieval system.

3. The apparatus of claim 1 or 2, wherein the communication system comprises a 5G communication system configured to facilitate the delivery of one or more items from the automated storage and retrieval system via 5G cloud services.

4. The apparatus of any of the preceding claims, the apparatus further comprising a power module mounted on the mobile platform, wherein the power module is configured to supply power to one or more components of the autonomous pico-fulfillment center.

5. The apparatus of any of the preceding claims, the apparatus further comprising a robotic packaging and address system mounted on the mobile platform, wherein the robotic packaging and address system is configured to receive the one or more items from the robotic pick and place system, package the one or more items, and affix addressee information to said package.

6. The apparatus of any of the preceding claims, the apparatus further comprising one or more autonomous mobile robots, wherein the autonomous mobile robots are configured to deliver the one or more items to a delivery location.

7. The apparatus of any of the preceding claims, the apparatus further comprising a stabilization system mounted on the mobile platform, wherein the stabilization system is configured to stabilize at least the automated storage and retrieval system.

8. The apparatus of any of the preceding claims, wherein at least a portion of the automated storage and retrieval system is temperature controlled.

9. The apparatus of any of the preceding claims, the apparatus further comprising one or more video capture devices mounted on the mobile platform, wherein the one or more video capture devices are configured to transmit a video stream of a surrounding area around or within the autonomous mobile pico-fulfillment center.

10. The apparatus of any of the preceding claims, wherein the mobile platform comprises a set of wheels to facilitate the movement of the autonomous mobile pico-fulfillment center.

11. A method for fulfillment of electronic orders using an autonomous pico-fulfillment center, the method comprising:
receiving, via a communication system, one or more navigational indications indicative of one or more deployment points;
receiving, via a communication system, one or more electronic orders from a warehouse management system, wherein the one or more electronic orders comprise one or more items to deliver and the one or more electronic orders received are based at least in part on the one or more deployment points;
generating a control indication to cause an automated storage and retrieval system to perform delivery of one or more items from the one or more electronic orders to the robotic pick and place system; and
generating a control indication to cause the robotic pick and place system to pick the one or more items from the one or more electronic orders and place the one or more items in a delivery location.

12. The method of claim 11, further comprising generating a control indication to cause a robotic packaging and address system to receive the one or more items from the robotic pick and place system, package the one or more items, and affix addressee information to said package.

13. The method of claim 11 or 12, further comprising:
receiving, via the communication system, an electronic delivery request indicative to deliver the one or more items corresponding to one or more electronic orders to a delivery location;
generating a control indication to cause an autonomous mobile robot to deliver the one or more items corresponding to one or more electronic orders to the delivery location.

14. A computer program product configured for fulfillment of electronic orders using an autonomous pico-fulfillment center, the computer program product comprising at least one non-transitory computer-readable storage medium having computer executable program code instructions therein, the computer executable program code instructions comprising program code instructions configured, upon execution, to:
receive, via a communication system, one or more navigational indications indicative of one or more deployment points;
receive, via a communication system, one or more electronic orders from a warehouse management system, wherein the one or more electronic orders comprise one or more items to deliver and the one or more electronic orders received are based at least in part on the one or more deployment points;
generate a control indication to cause an automated storage and retrieval system to perform delivery of one or more items from the one or more electronic orders to a robotic pick and place system; and
generate a control indication to cause the robotic pick and place system to pick the one or more items from the one or more electronic orders and place the one or more items in a delivery location.

15. The computer program product of claim 14, wherein the computer program code instructions further comprise program code instructions configured to, upon execution, to generate a control indication to cause a robotic packaging and address system to receive the one or more items from the robotic pick and place system, package the one or more items, and affix addressee information to said package.
